# EUROPÄISCHE PATENTSCHRIFT

(11) **EP 2 750 861 B1**
(45) Veröffentlichungstag und Bekanntmachung des Hinweises auf die Patenterteilung: **04.11.2015**
(21) Anmeldenummer: 12759650.0
(22) Anmeldetag: 30.08.2012
(51) Int. Cl.: B29C 51/14, B62K 19/16, B62K 19/22

(54) **ZWEIRADRAHMEN, ZWEIRAD UND VERFAHREN ZUR HERSTELLUNG EINES ZWEIRADRAHMENS**
BICYCLE FRAME, BICYCLE AND METHOD FOR PRODUCING A BICYCLE FRAME
CADRE DE DEUX-ROUES, DEUX-ROUES ET SON PROCÉDÉ DE PRODUCTION

(30) Priorität: 30.08.2011 DE 102011053100
(43) Veröffentlichungstag der Anmeldung: 09.07.2014
(73) Patentinhaber: Rehau AG & Co, 95111 Rehau (DE)
(72) Erfinder: AL-SHEYYAB, Ahmad, 95111 Rehau (DE); KÖHLER, Timo, 96271 Grub am Forst (DE)
(86) Internationale Anmeldenummer: PCT/EP2012/003642
(87) Internationale Veröffentlichungsnummer: WO 2013/029788

(56) Entgegenhaltungen:
- EP-A1- 0 511 421
- EP-A1- 0 861 769
- WO-A1-95/27648
- DE-A1-102007 036 869
- DE-U- 7 432 809
- DE-U1-202006 019 341
- FR-A1- 2 934 238
- GB-A- 1 281 731
- US-A- 4 548 422
- US-A- 5 456 481
- US-A- 5 769 442
- US-A- 6 123 353
- Peter Barzel, Michael Bollschweiler, Christian Smolik: "Die neue Fahrradtechnik -Material Konstruktion Fertigung", 31. Mai 2008 (2008-05-31), BVA - Bielefelder Verlag GmbH & Co. KG, Bielefeld, XP002687253, ISBN: 978-3-87073-322-3 Seite 1 - Seite 2 Tiefziehen von Organoblechen; Seite 82 - Seite 83 Karbonrahmenfertigung aus Organoblechen; Seite 107 - Seite 108

## Beschreibung

Die Erfindung betrifft einen Zweiradrahmen gemäß dem Oberbegriff des Anspruchs 1.

Es ist bekannt, Zweiradrahmen aus Metall oder aus duroplastischem, faserverstärktem Kunststoffmaterial in einem Wickelverfahren oder aus einer Vielzahl von einzelnen Rohrsegmenten in aufwendiger Handarbeit herzustellen.

Die DE 38 04 342 C2 offenbart einen Fahrradrahmen sowie eine zugehörige Vorderradgabel, die aus Leichtmetall- oder Thermoplastdruckguss hergestellt sind.

Die DE 196 40 955 A1 zeigt ein Verfahren zur Herstellung eines Hohlkörperprofils für Fahrradrahmen, wobei das Hohlkörperprofil als aus mehreren schalenförmigen Elementen aufgebauter Verbundkörper ausgebildet ist. Aus der DE 692 130 07 T ist ebenfalls ein Herstellungsverfahren für Fahrradrahmen aus Polymermaterial bekannt. Die US 6 340 509 B1 beschreibt einen Komposit-Fahrradrahmen, der Verstärkungsfasern enthält.

In der Vergangenheit gab es zudem vereinzelte Ansätze, Zweiradrahmen vollständig in einem Kunststoffspritzgussverfahren aus thermoplastischem Kunststoffmaterial zu fertigen. Entsprechende Zykluszeiten liegen hierbei zwar um Größenordnungen unter denen eines Duroplast-Zweiradrahmens, jedoch sind aufgrund der geringen maximalen Wandungsstärken (wenige Zentimeter bzw. Millimeter) die im Kunststoff-Spritzgussverfahren erzielbar sind, die mechanischen Eigenschaften derartiger Zweiradrahmen unzureichend.

Die US 5 769 442 A, DE 10 2007 036 869 A1, US 5 456 481 A und DE 74 32 809 U offenbaren Fahrradrahmen mit den Merkmalen des Oberbegriffs des Patentanspruchs 1.

Die Erfindung stellt sich die Aufgabe, einen Zweiradrahmen anzugeben, welcher gegenüber dem Stand der Technik eine wirtschaftlich Herstellung und verbesserte mechanische Eigenschaften aufweist.

Erfindungsgemäß wird diese Aufgabe gelöst durch die Merkmale des Patentanspruchs 1. Eine Halbschale lässt sich einfach und kostengünstig in einem Pressverfahren, in einem Thermoformingverfahren (Tiefziehverfahren bei erhöhter Temperatur) oder durch integrierte Umformung in einem Spritzguss-Werkzeug durch den Einsatz eines thermoplastischen Kunststoffmaterials in kurzen Zykluszeiten im Vergleich zu duroplastischen Kunststoffmaterialien herstellen.

Vorzugsweise ist das Deckelement zumindest im Wesentlichen spiegelbildlich zu der Halbschale ausgebildet. Geringe Abweichungen ergeben sich bei der Spiegelbildlichkeit insbesondere im Hinblick auf Unterschiede in der Befestigung von Zusatzelementen, z.B. müssen Bremsanlagenteile evtl. nur auf einer Seite des Zweiradrahmens also entweder auf der Seite des Deckelements oder auf der Seite der Halbschale geführt werden, so dass sich hierdurch beispielhaft die vorstehend beschriebenen Abweichungen gegenüber einer Spiegelbildlichen Darstellung ergeben.

Die Halbschale und das Deckelement sind vorzugsweise durch sich überlappende und / oder aneinander anliegende Fügeabschnitte miteinander verbunden. Die Fügeabschnitte sind dabei vorzugsweise als ebene Flächen in den Randbereichen der Halbschale bzw. des Deckelements ausgebildet.

Im Bereich der Fügeabschnitte kann mindestens ein bestrombares Heizelement angeordnet sein, wobei das Heizelement vorzugsweise durch mindestens einen Metallleiter oder durch mindestens eine Carbonfaser gebildet ist. Das mindestens eine bestrombare Heizelement stellt bei entsprechender Bestromung die für die Herstellung der Verbindung erforderliche Energie bereit, wobei diese vorteilhafterweise nur lokal im Bereich der Fügeabschnitte frei wird, so dass der angrenzende Bereich der Halbschale und/oder des Deckelements keiner bzw. einer geringen thermischen Belastung ausgesetzt wird. Die Bestromung kann hierbei durch direktes Anlegen einer Spannung oder indirekt über eine Induktion mittels eines Wechselfeldes erfolgen. Ein weiterer Vorteil ergibt sich bei der Verwendung eines Metallleiters (wie z.B. einem Widerstandsdraht), da dieser nach dem Verbinden von Halbschale und Deckelement darüber hinaus als Signal- und/oder Stromleiter verwendet werden kann. Desweiteren ergibt sich bei der Verwendung einer Carbonfaser der Vorteil, dass diese die Festigkeit des Verbindungsbereiches der Fügeabschnitte erhöht.

Das Heizelement kann auf dem Fügeabschnitt angeordnet werden, z. B. mittels einer form- und/oder einer kraftschlüssigen Verbindung. Vorzugsweise ist das Heizelement innerhalb des Fügeabschnittes aufgenommen, z.B. indem bei der Herstellung des entsprechenden Fügeabschnittes in einem Kunststoff-Spritzgussverfahren das Heizelement an- oder umspritzt wird. Hierdurch ist gewährleistet, dass sich das Heizelement immer in der korrekten Position im Bezug zu den Fügeabschnitten befindet.

Die Halbschale und das Deckelement sind vorzugsweise mittels einer Klebstoffschicht und / oder einer Schweißverbindung und / oder einer Schraubverbindung und / oder einer Nietverbindung und / oder einer Clinchverbindung miteinander verbunden. Insbesondere die Kombination einer Klebstoffschicht und einer punktförmigen Verbindung (z.B. Punktschweißverbindung, Schraubverbindung, Nietverbindung oder Clinchverbindung) erlauben einerseits einen sofortigen Verbund zwischen Deckelement und Halbschale aufgrund der punktförmigen Verbindung, sowie andererseits eine flächige und damit insbesondere gegenüber einer schwingenden Belastung wesentlich tolerantere Verbindung über eine Klebstoffschicht. Aufgrund des thermoplastischen Kunststoffmaterials, aus welchem die Halbschale und vorzugsweise auch das Deckelement gebildet sind, können vorteilhafterweise im Vergleich zu Zweiradrahmen aus einem duroplastischem Kunststoffmaterial eine Vielzahl von Schweißverfahren eingesetzt werden. Im Besonderen eignet sich ein Reibschweißverfahren oder ein Laserschweißverfahren zur Verbindung von Halbschale und Deckelement. Alternative Schweißverfahren können das Induktionsschweißen, Infrarot-Schweißen, Widerstandsschweißen, Vibrationsschweißen oder Heizelementschweißen sein. Bevorzugt kann bei allen vorgenannten Schweißverfahren ein Zusatzwerkstoff zugegeben werden, vorzugsweise ebenfalls ein Faserverstärktes thermoplastisches Kunststoffmaterial. Als Zusatzwerkstoff eignet sich insbesondere ein bandförmiger Zusatzwerkstoff (ein sog. Tape) aus einem Endlos-Faserverstärkten thermoplastischen Kunststoffmaterial. Ein entsprechender bandförmiger Zusatzwerkstoff eignet sich jedoch auch für eine Klebeverbindung von Halbschale und Deckelement und kann als Verstärkung im Bereich der Fügeabschnitte angeordnet und/oder zusammen mit den Fügeabschnitten verklebt werden.

Die Halbschale und / oder das Deckelement kann / können mindestens einen U-förmigen Querschnitt mit daran angrenzenden Fügeabschnitte aufweisen. Ein V-förmiger Querschnitt wird hierbei als ein spitz zulaufender U-förmiger Querschnitt angesehen. Derartige Querschnittsgeometrien lassen sich besonders einfach und kostengünstig mittels dem Fachmann bekannter Umformverfahren und / oder Urformverfahren herstellen und weisen zudem einen homogenen Spannungsverlauf in dem erfindungsgemäßen Zweiradrahmen auf.

Vorzugsweise weist die Halbschale und / oder das Deckelement mindestens zwei U-förmige Querschnitte auf, die über mindestens einen, vorzugsweise zwischen den U-förmigen Querschnitten angeordneten, Fügeabschnitt miteinander gekoppelt sind. Der Fügeabschnitt zwischen den mindestens zwei U-förmigen Querschnitten vergrößert gegebenenfalls zum einen die verfügbare Fügefläche und erhöht zum anderen die Steifigkeit des erfindungsgemäßen Zweiradrahmens. Die Verbindung des Fügeabschnitts zwischen den mindestens zwei U-förmigen Querschnitten erfolgt analog zu den vorstehen erläuterten Möglichkeiten mittels einer Klebstoffschicht und / oder einer Schweißverbindung und / oder einer Schraubverbindung und / oder einer Nietverbindung und / oder einer ClinchVerbindung.

Um die Fertigungskosten des erfindungsgemäßen Zweiradrahmens weiter zu senken, kann vorteilhaft vorgesehen sein, dass die Halbschale und / oder das Deckelement mindestens ein angeformtes, insbesondere in einem Spritzgussverfahren angeformtes, funktionsintegrierendes Element aufweist bzw. aufweisen. Das funktionsintegrierende Element kann als Versteifungsrippe oder als, vorzugsweise metallisches Insert oder als Halteelement oder als Schutzelement oder als stromleitendes Element oder als Spritzschutzelement oder als Stauraumelement oder als Beleuchtungsaufnahme oder als Verbindungselement oder als Medienkanal oder als Stoßschutzelement oder als Schraubenelementaufnahme (Schraubdom) ausgebildet sein. In besonders vorteilhafter Weise lassen sich die weiteren für die Fertigstellung eines Zweirades notwendigen Komponenten wie z.B. Radaufnahmen oder Tretlager oder Steuerrohraufnahmen bereits bei der Herstellung des Zweiradrahmens integrieren, so dass hier zusätzliche Füge- und / oder Montagearbeiten entfallen. Aufgrund des thermoplastischen Materials der Halbschale und / oder des Deckelements lässt sich das funktionsintegrierende Element gegebenenfalls mittels eines Kunststoff-Spritzgussverfahrens anformen. Insbesondere ein Stoßschutzelement lässt sich in einem Kunststoff-Spritzgussverfahren aus einem gegenüber dem thermoplastischen Kunststoffmaterial des Deckelements und/oder des thermoplastischen Kunststoffmaterials der Halbschale weicheren Kunststoffmaterial (ggf. mit Haftvermittlern) anformen. Das Stoßschutzelement schützt vorteilhaft die Oberflächenstruktur und die Integrität des Zweiradrahmens. Die Halbschale und das Deckelement schließen vorzugsweise einen Hohlraum miteinander ein. Vorzugsweise ist innerhalb des Hohlraumes mindestens ein elektrischer Leiter und / oder mindestens eine Steuerleitung und / oder mindestens eine Medienleitung und / oder mindestens ein Bewegungsübertragungsorgan und / oder mindestens ein Energiespeicher angeordnet. Aufgrund des erfindungsgemäßen Aufbaus des Zweiradrahmens mit mindestens einer Halbschale kann der durch die Halbschale und das Deckelement miteinander eingeschlossene Hohlraum zur Führung und zum Schutz der vorgenannten Elemente genutzt werden. Vorteilhafterweise werden die vorgenannten Elemente insbesondere vor Witterungseinflüssen und Verschmutzungen geschützt.

Mindestens einer der vorgenannten Fügeabschnitte kann durch ein angeformtes, insbesondere in einem Kunststoff-Spitzgussverfahren angeformtes, Kaschierelement zumindest bereichsweise verdeckt sein. Das Kaschierelement erfüllt dabei eine Doppelfunktion in dem es zum einen die Fügeabschnitte - und damit Teile oder die gesamte Fügezone - vor Witterungseinflüssen kapselt bzw. schützt und zum anderen, dass der ästhetisch evtl. nachteilige Eindruck dieser Fügeabschnitte überdeckt und damit kaschiert wird. Aufgrund des Einsatzes eines thermoplastischen Kunststoffmaterials für die Halbschale und vorzugsweise auch das Deckelement, lässt sich das Kaschierelement insbesondere mittels eines Kunststoff-Spritzgussverfahrens anformen. Das Kaschierelement kann auch zum Verbinden der Fügeabschnitte dienen. Die Fügeabschnitte weisen dann vorzugsweise sich deckende Materialausformungen (z.B. Löcher oder abstehende Bereiche) auf, die zur Bildung von Hinterschneidungen von dem das Kaschierelement bildenden Kunststoffmaterial durch-, aus- oder umspritzt werden.

Die Halbschale und/oder das Deckelement können jeweils Zonen mit unterschiedlich stark ausgeprägter Faserverstärkung aufweisen, so dass die Belastbarkeit der Zonen an die dort zu erwartende Beanspruchung angepasst ist. In Zonen mit einer hohen zu erwartenden Beanspruchung, wie z.B. im Bereich des Tretlagers, des Steuerrohrs oder des Ober- bzw. Unterrohrs eines Zweiradrahmens, kann eine dichtere und/oder belastbarere Faserverstärkung des thermoplastischen Kunststoffmaterials und/oder eine Faserverstärkung mit einem höheren Faservolumenanteil in dem thermoplastischen Kunststoffmaterial vorgesehen sein.

Erfindungsgemäß ist/sind die Halbschale und/oder das Deckelement in einem Kunststoff-Spritzgussverfahren hergestellt, wobei lediglich ein oder mehrere Teilbereich/e der Halbschale und/oder des Deckelements durch mindestens ein an-, hinter- und/oder umspritztes Faserverstärktes thermoplastisches Organoblech gebildet ist / sind. In diesem Zusammenhang spricht man auch von einem Hybridaufbau der Halbschale und/oder des Deckelements mit spritzgegossenen Bereichen und mit Bereichen die durch mindestens ein, vorzugsweise mittels eines Umformvorgang hergestellten, Faserverstärkten thermoplastischen Organoblech gebildet sind. Der Umformvorgang erfolgt vorteilhafterweise innerhalb des Spritzguss-Werkzeuges selbst. Alternativ erfolgt der Umformvorgang vor dem Einlegen des dann bereits umgeformten Organobleches in das vorgenannte Spritzguss-Werkzeug. Die spritzgegossenen Bereiche können eine Kurz- und/oder Langfaserverstärkung aufweisen. Bei einem Organoblech handelt es sich um ein Verstärkungsfasem enthaltendes, plattenförmiges oder bandförmiges thermoplastisches Halbzeug (Prepreg), welches sich (analog zu einem Metallblech) nachfolgenden Umformschritten unterziehen lässt. Das oder die Organoblech/e bilden vorzugsweise die Zonen mit unterschiedlich stark ausgeprägter Faserverstärkung, so dass die Belastbarkeit der Zonen an die dort zu erwartende Beanspruchung angepasst ist. Vorzugsweise ist das oder sind die Organobleche im Bereich des Tretlagers, des Steuerrohrs oder des Ober- bzw. Unterrohrs eines Zweiradrahmens angeordnet. Das Organoblech kann eine dichtere und/oder belastbarere Faserverstärkung des thermoplastischen Kunststoffmaterials und/oder eine Faserverstärkung mit einem höheren Faservolumenanteil in dem thermoplastischen Kunststoffmaterial des Organoblechs im Vergleich zu den spritzgegossenen Bereichen aufweisen.

Die Faserverstärkung des thermoplastischen Kunststoffmaterials oder des thermoplastischen Organoblechs oder des Zusatzwerkstoffes kann bereichsweise oder vollständig aus Kurz- und/oder Lang- und/oder Endlosfasern bestehen. Die Endlosfasern können unidirektional ausgerichtet oder als Gewebe ausgebildet sein. Die Faserverstärkung des thermoplastischen Kunststoffmaterials und / oder des thermoplastischen Organoblechs und / oder des Zusatzwerkstoffes kann / können durch Glasfasern, Karbonfasern (auch Kohlefaser oder Carbonfaser genannt), Aramidfasern, Basaltfasern, Mineralfasern, Fasern aus nachwachsenden Rohstoffen, Metallfasern und / oder durch Polymerfasern gebildet sein. Das Organoblech kann einen mehrschichtigen Aufbau aus mindestens zwei Schichten aufweisen. Vorzugsweise wechselt hierbei eine Schicht mit einer Glasfaserverstärkung mit einer Schicht mit einer Karbonfaserverstärkung ab. Weiter vorzugsweise bildet die Schicht mit einer Carbonfaserverstärkung die Außenoberfläche (Sichtfläche) des Zweiradrahmens aus.

Das thermoplastische Kunststoffmaterial und / oder die thermoplastische Matrix (das thermoplastische Kunststoffmaterial) des Organoblechs und / oder das thermoplastische Material des Zusatzwerkstoffes kann Polyamid (PA), insbesondere Polyamid 6 und Polyamid 6.6, Polypropylen (PP), Polyethylen (PE), POM (Polyoxymethylen), Polyphenylensulfid (PPS), Polyetheretherketon (PEEK), Polyetherimid (PEI), Polyethylenterephthalat (PET), Polyphthalamid (PPA), vergleichbare Technische- oder Hochtemperatur-Kunststoffmaterialien oder Kombinationen der vorgenannten Kunststoffmaterialien umfassen.

Ein erfindungsgemäßer Zweiradrahmen kann Teil eines Fahrrades, Elektrofahrrades (sog. E-bike), Pedelecs, Mofas oder Motorrads sein.

Im Folgenden wird die Erfindung anhand lediglich Ausführungsbeispiele darstellender Zeichnungen erläutert. Es zeigen schematisch:
- Fig. 1: eine geschnittene räumliche Darstellung eines Teils eines nicht erfindungsgemäßen Zweiradrahmens,
- Fig. 2 und 3: Querschnittsdarstellungen von erfindungsgemäßen Zweiradrahmen im verbundenen Zustand,
- Fig. 4: einen erfindungsgemäßen Zweiradrahmen mit zwei U-förmig ausgebildeten und über einen zusätzlichen Fügeabschnitt verbundene Querschittsgeometrie,
- Fig. 5-7: weitere Ausführungsformen mit U-förmigen Querschnitten aufweisenden Halbschalen,
- Fig. 8: eine weitere Ausführungsform eines erfindungsgemäßen Zweiradrahmens mit daran angeformten funktionsintegrierenden Elementen vor dem Verbinden mit Halbschale und Deckelement,
- Fig. 9: den in Fig. 8 dargestellten Zweiradrahmen im verbundenen Zustand und mit angespritzten Kaschierelementen,
- Fig. 10: eine dreidimensionale Darstellung des Innenbereichs der Halbschale eines erfindungsgemäßen Zweiradrahmens,
- Fig. 11: die schematische Darstellung einer Draufsicht eines erfindungsgemäßen Zweiradrahmens vor dem Verbindungen von Halbschale und Deckelement,
- Fig. 12a-c: eine weitere Ausführungsform eines erfindungsgemäßen Zweiradrahmens mit einem im Bereich der Fügeabschnitte angeordneten Heizelement,
- Fig. 13: eine Querschnittsdarstellung eines weiteren erfindungsgemäßen Zweiradrahmens mit in dem Bereich der Fügeabschnitte angeordneten Heizelementen,
- Fig. 14: eine Draufsicht auf den Innenbereich einer Halbschale eines erfindungsgemäßen Zweiradrahmens, mit einem an-, hinter- und/oder umspritzten Faserverstärkten thermoplastischen Organoblech,
- Fig. 15: eine Querschnittsdarstellung eines weiteren erfindungsgemäßen Zweiradrahmens mit in dem Bereich der Fügeabschnitte angeordneten Heizelementen,
- Fig. 16: eine dreidimensionale Teildarstellung eines weiteren erfindungsgemäßen Zweiradrahmens mit in dem Bereich der Fügeabschnitte angeordneten Heizelementen.

In den Figuren werden gleiche oder funktionsgleiche Elemente mit den gleichen Bezugszeichen versehen.

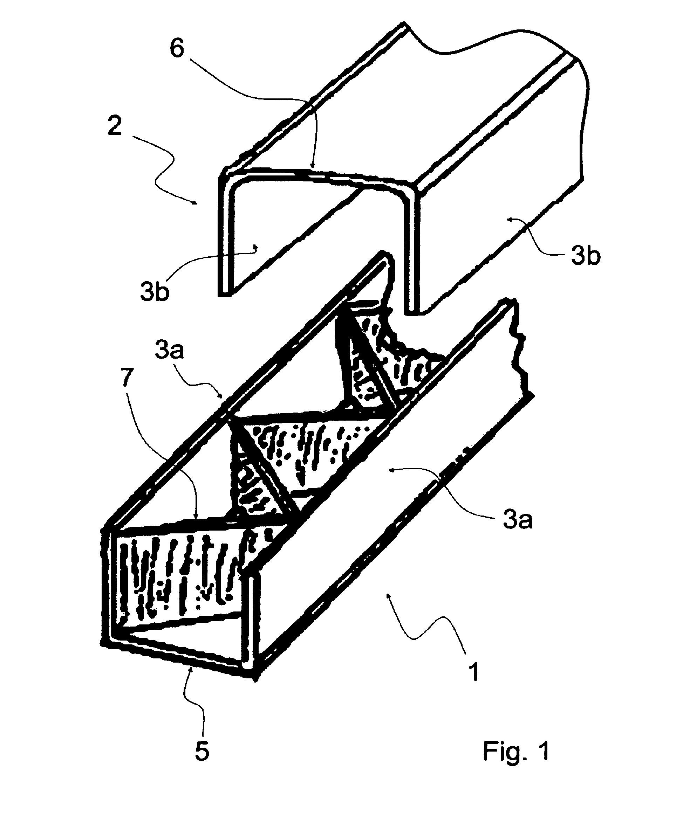

Die Fig. 1 zeigt einen Teil eines nicht erfindungsgemäßen Zweiradrahmen vor dem bereichsweisen Verbinden der Halbschale 1 aus einem faserverstärkten thermoplastischen Kunststoffmaterial mit einem Deckelement 2 aus einem faserverstärkten thermoplastischen Kunststoffmaterial, wobei das Deckelement 2 die Halbschale 1 im verbundenen Zustand schließt. Die Halbschale 1 und das Deckelement sind aus einem Carbonfaserverstärkten Polyamid 6.6 gebildet. Die Halbschale 1 weist einen U-förmigen Querschnitt 5 mit daran angrenzenden Fügeabschnitten 3a auf. Das Deckelement 2 weist ebenfalls einen U-förmigen Querschnitt 6 mit daran angrenzenden Fügeabschnitten 3b auf. Im verbundenen Zustand sind die Halbschale 1 und das Deckelement 2 durch diese sich überlappenden und aneinander anliegenden Fügeabschnitte 3a und 3b miteinander verbunden. Die Halbschale 1 weist ein in einem Spritzgussverfahren angeformtes funktionsintegrierende Element 7 in Form von Versteifungsrippen auf. Die Halbschale 1 und das Deckelement 2 sind durch einen Umformvorgang aus einem Faserverstärkten thermoplastischen Organoblech gebildet.

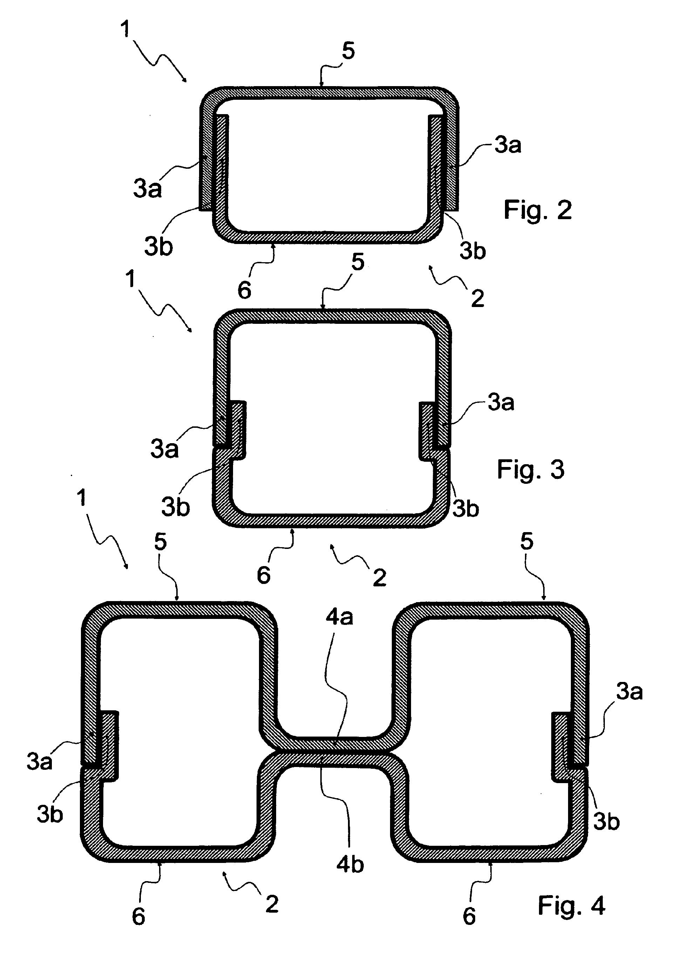

Die Fig. 2 und 3 zeigen Ausführungsformen eines erfindungsgemäßen Zweiradrahmens, wobei hier jeweils eine Querschnittsdarstellung gezeigt ist. Die Halbschale 1 ist in den Fig. 2 und 3 U-förmig ausgebildet bzw. weist einen U-förmigen Querschnitt 5 mit daran angrenzenden Fügeabschnitten 3a auf. Das Deckelement 2 weist ebenfalls jeweils einen U-förmig Querschnitt 6 auf, welcher angrenzende Fügeabschnitte 3b aufweist. Die Halbschale 1 und das mit der Halbschale 1 bereichsweise verbundene und dieses schließende Deckelement 2 ist über die sich überlappenden und aneinander anliegenden Fügeabschnitte 3a, 3b miteinander verbunden. In Fig. 3 sind die Fügeabschnitte 3b des Deckelements 2 so ausgebildet, dass sich im verbundenen Zustand von Halbschale 1 und Deckelement 2 ein Zweiradrahmen mit weitgehend ebenen Außenflächen ergibt. Die Faserverstärkung des thermoplastischen Kunststoffmaterials der Halbschale 1 umfasst bereichsweise oder vollständig Endlosfasern. Die Faserverstärkung ist durch Glasfasern gebildet, wobei das thermoplastische Material PEEK umfasst.

Die Fig. 4 zeigt eine weitere Ausführungsform eines erfindungsgemäßen Zweiradrahmens im Querschnitt, wobei die Halbschale 1 und das Deckelement 2 jeweils zwei U-förmige Querschnitte 5 und 6 aufweisen, die über einen Fügeabschnitt 4a bzw. 4b miteinander gekoppelt sind. Diese zusätzlich zu den sich überlappenden und aneinander anliegenden Fügeabschnitten 3a und 3b ausgebildeten Fügeabschnitte 4a und 4b vergrößern die Fügefläche über welche die Halbschale 1 und das Deckelement 2 bereichsweise miteinander verbunden sind.

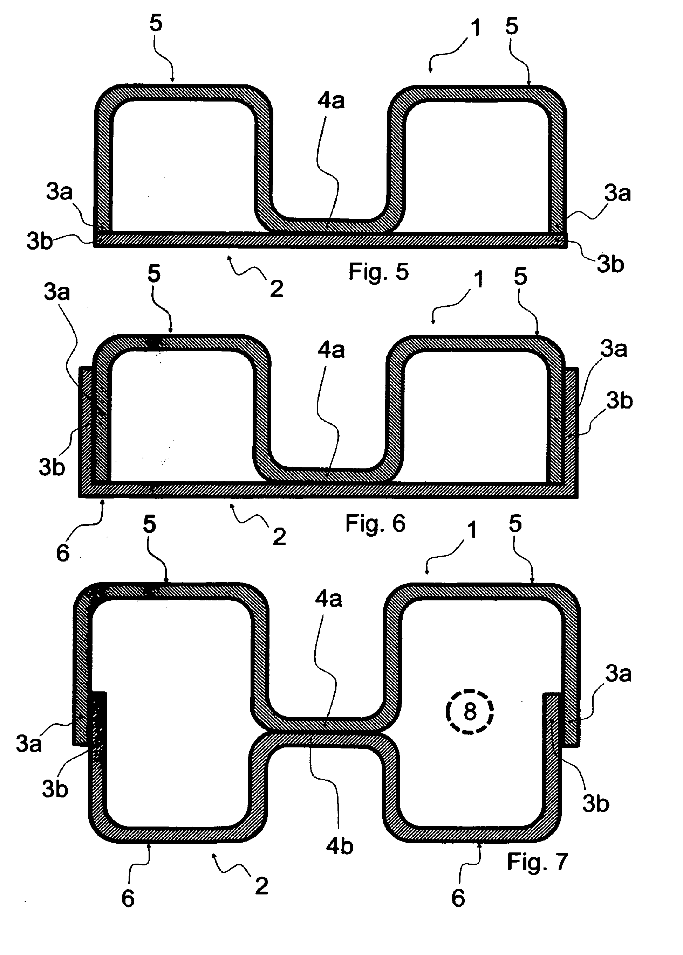

Die Fig. 5 und 6 zeigen weitere Ausführungsformen eines erfindungsgemäßen Zweiradrahmens im Querschnitt. Die Ausführungsformen weisen jeweils eine Halbschale 1 mit mindestens zwei U-förmigen Querschnitten 5 auf, die über einen Fügeabschnitt 4a miteinander gekoppelt sind. In Fig. 5 ist das Deckelement im Wesentlichen flächig ausgebildet. Das Deckelement 2 in Fig. 6 weist nur einen U-förmigen Querschnitt 6 auf, welcher über die daran angrenzenden Fügeabschnitte 3b mit den Fügeabschnitten 3a der Halbschale 1 verbunden ist. Im mittleren Bereich liegt der Fügeabschnitt 4a der Halbschale 1 flächig im mittleren Bereich des Deckelements 2 auf und ist hier ebenfalls mit diesem verbunden.

Die Fig. 7 entspricht im Wesentlichen dem Ausführungsbeispiel aus Fig. 4, wobei hier die sich überlappenden Fügeabschnitte 3a und 3b der Halbschale 1 bzw. des Deckelements 2 eine Stufe in der Materialstärke der Halbschale 1 auf den entsprechenden Außenflächen des Zweiradrahmens bilden. Die Halbschale 1 und das Deckelement 2 schließen einen Hohlraum ein, wobei innerhalb des Hohlraumes (Bezugszeichen 8 - symbolisch gestrichelt eingezeichnet) ein elektrischer Leiter oder eine Steuerleitung oder eine Medienleitung oder ein Bewegungsübertragungsorgan (z.B. ein Bowdenzug) oder eine Energiespeicher angeordnet ist.

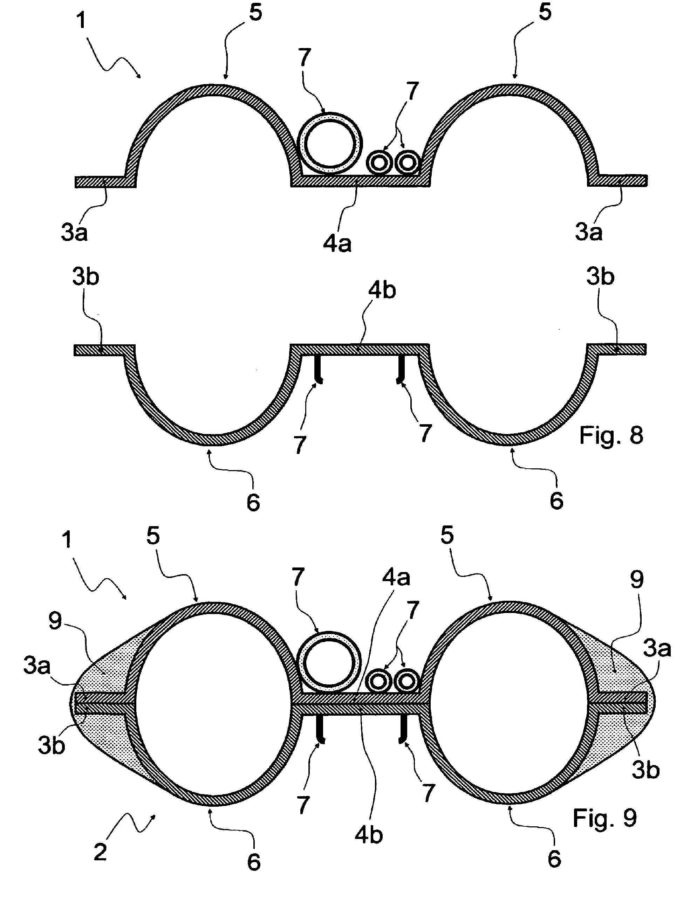

Die Fig. 8 und 9 zeigen im Querschnitt eine weitere Ausführungsform eines erfindungsgemäßen Zweiradrahmens vor und nach dem Verbinden von Halbschale 1 und Deckelement 2. Im verbundenen Zustanden (vgl. Fig. 9) sind die Fügeabschnitte 3a und 3b der Halbschale 1 und des Deckelements 2 durch ein angeformtes Kaschierelement 9 verdeckt. Das Kaschierelement 9 besteht aus einem Kunststoffmaterial welches artgleich oder zumindest verträglich zu dem thermoplastischen Kunststoffmaterial der Halbschale 1 und mittels eines Spritzgussverfahrens angeformt ist. Hierdurch ergibt sich zum einen ein verbesserter Schutz der durch die Fügeabschnitt 3a und 3b gebildeten Fügezone vor Umwelteinflüssen und ein verbesserter ästhetischer Eindruck des erfindungsgemäßen Zweiradrahmens. Im Bereich der Fügeabschnitte 4a und 4b der Halbschale 1 und des Deckelements 2 sind funktionsintegrierende Elemente 7 in Form eines Medienkanals 7e (z.B. für Hydrauliköl), elektrischen Leitern 7f und einem Halteelement 7g angeformt.

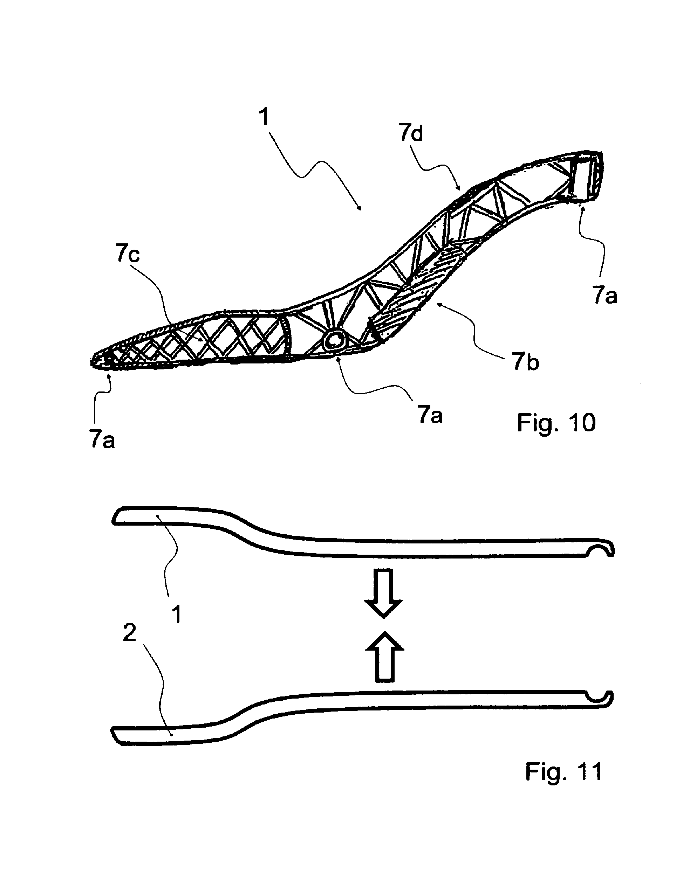

Die Fig. 10 zeigt eine Innenansicht einer Halbschale 1 eines erfindungsgemäßen Zweiradrahmens. Die Halbschale 1 weist in einem Spritzgussverfahren angeformte funktionsintegrierende Elemente in Form von metallischen Inserts 7a, einem Stauraumelement 7b zur Aufnahme z.B. eines elektrischen Energiespeichers, von Versteifungsrippen 7c und von Verbindungselementen 7d zu einem den Sattel aufnehmenden Element (hier nicht näher dargestellt) auf. Die Halbschale 1 weist Zonen mit unterschiedlich stark ausgeprägter Faserverstärkung auf, so dass die Belastbarkeit der Zonen an die dort zu erwartende Beanspruchung angepasst ist. In den Zonen mit einer hohen zu erwartenden Beanspruchung, wie z.B. im Bereich des Tretlagers, des Steuerrohrs oder des Ober- bzw. Unterrohrs des Zweiradrahmens, ist eine dichtere und/oder belastbarere Faserverstärkung des thermoplastischen Kunststoffmaterials vorgesehen.

Fig. 11 zeigt nunmehr schematisch in einer Draufsicht von oben (bezogen auf den fertigen Zweiradrahmen), wie eine Halbschale 1 entsprechend der Fig. 10 mit einem bereitgestellten Deckelement 2, welches im Wesentlichen spiegelbildlich zu der Halbschale 1 ausgebildet ist, verbunden wird. Die Verbindung erfolgt dabei bereichsweise zwischen der Halbschale 1 und dem Deckelement 2, die hierbei einen geschlossenen Hohlkörper bilden. Durch das bereichsweise Verbinden liegt im Bereich der hinteren Radaufnahme (also an dem der Steuerrohraufnahme entgegengesetzten Ende) ein offenes Deckelement 2 bzw. eine offene Halbschale 1 vor, zwischen welcher entsprechend ein Hinterrad aufgenommen werden kann. Denkbar ist, dass über weitere Zusatzdeckelemente diese Bereiche ebenfalls vor Witterungseinflüssen verschlossen werden.

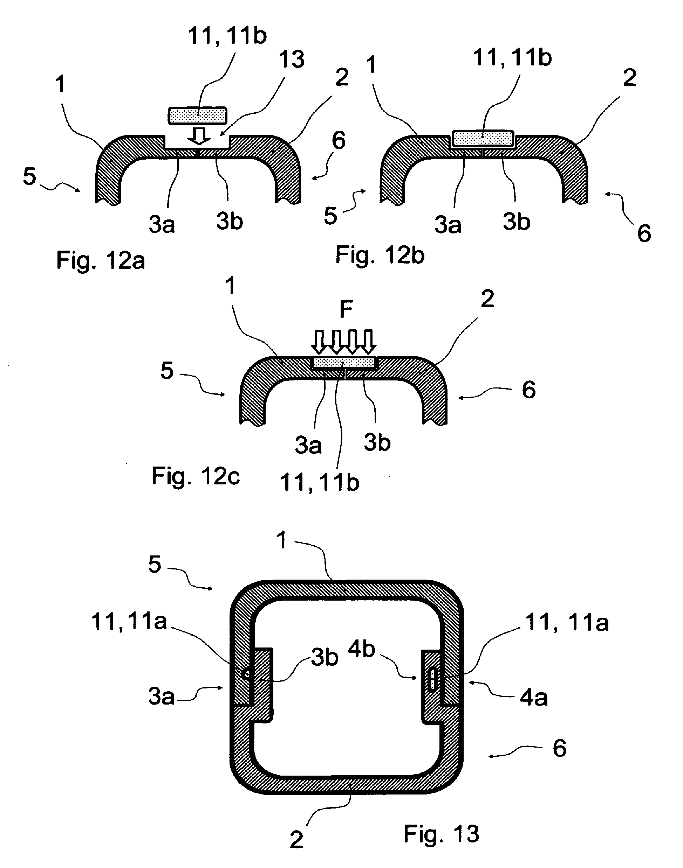

Fig. 12 zeigt in einzelnen Schritten schematisch das Verbinden einer Halbschale 1 aus einem Faserverstärkten thermoplastischen Kunststoffmaterial mit einem diese schließenden Deckelement 2 durch zwei aneinander anliegende (nicht zwangsläufig berührende) Fügeabschnitte 3a und 3b. Das Deckelement 2 ist zumindest im Wesentlichen spiegelbildlich zu der Halbschale 1 ausgebildet. Halbschale 1 und Deckelement 2 weisen jeweils einen U-förmigen Querschnitt 5, 6 (hier nur zum Teil dargestellt) mit den daran angrenzenden Fügeabschnitte 3a und 3b auf. Die beiden Fügeabschnitte 3a und 3b werden durch eine Wanddickenverringerung der Randbereiche von Halbschale 1 und Deckelement 2 gebildet. Der entstehende Freiraum 13 dient zur Aufnahme eines im Bereich der Fügeabschnitte 3a, 3b angeordneten, bestrombaren Heizelements 11. Das Heizelement 11 wird hierbei durch ein endlosfaserverstärktes Band mit einer thermoplastischen Matrix gebildet, wobei dessen Faserverstärkung eine Vielzahl von Carbonfasern 11 b (auch Kohlenstofffaser oder Karbonfaser genannt) umfasst (vgl. Fig. 12a). Nachfolgend wird das im Bereich der Fügeabschnitte 3a, 3b angeordnete Heizelement 11 bestromt, das heißt mit elektrischem Strom durchflossen (vgl. Fig. 12b). Das sich hierbei aufheizende Heizelement erwärmt sowohl die thermoplastische Matrix des endlosfaserverstärkten Bandes als auch das Faserverstärkte thermoplastische Kunststoffmaterial der beiden Fügeabschnitte 3a, 3b bis an oder bis über deren Schmelztemperatur. Die entstehende Verbindungszone wird nachfolgend oder gleichzeitig mit einer Kraft F verpresst (vgl. Fig. 12c), so dass der Freiraum 13 im Wesentlichen vollständig ausgefüllt wird. Nach dem Abkühlen dieser Schweiß-Verbindungszone gewährleistet die Endlosfaserverstärkung des Bandes / Heizelementes 11 eine erhöhte Festigkeit des Verbundes von Halbschale 1 und Deckelement 2.

Alternativ kann die in Fig. 12c gezeigte Verbindung von Halbschale 1 und Deckelement 2 durch ein von einem reinen Verschweißen verschiedenen Fügeverfahren erzielt werden. Insbesondere eine stoffschlüssige Klebeverbindung der Fügeabschnitte 3a, 3b lässt sich dann auch mit einem eingeklebten endlosfaserverstärkten und/oder fasergewebten Band bzw. Organoblech realisieren, dessen Faserverstärkung nicht zwingend durch Carbonfasern oder Metallfasern, sondern auch durch elektrisch nichtleitende Fasern wie Glasfasern, Aramidfasern, Basaltfasern, Mineralfasern, Fasern aus nachwachsenden Rohstoffen und / oder durch Polymerfasern gebildet sein kann.

Fig. 13 zeigt eine alternative Verbindung einer Halbschale 1 aus einem Faserverstärkten thermoplastischen Kunststoffmaterial mit einem diese schließenden Deckelement 2 durch sich überlappende Fügeabschnitte 3a, 3b und 4a, 4b. Das Deckelement 2 ist zumindest im Wesentlichen spiegelbildlich zu der Halbschale 1 ausgebildet. Halbschale 1 und Deckelement 2 weisen jeweils einen U-förmigen Querschnitt 5, 6 mit den daran angrenzenden Fügeabschnitte 3a, 3b und 4a, 4b auf. Im Bereich der Fügeabschnitte 3a, 3b und 4a, 4b sind bestrombare Heizelemente 11 angeordnet, wobei die Heizelemente 11 durch Metallleiter 11a gebildet sind. Das zwischen den beiden Fügeabschnitten 3a und 3b angeordnete Heizelement 11 in Form eines drahtförmigen Metallleiters 11a ist in einer Materialausformung der Halbschale 1 bzw. des Fügeabschnittes 3a der Halbschale 1 form- und kraftschlüssig aufgenommen. Die Bestückung der Materialausformung mit dem drahtförmigen Metallleiter 11a erfolgt hierbei vor dem Positionieren der Fügeabschnitte 3a, 3b zueinander. Das zwischen den beiden Fügeabschnitten 4a und 4b angeordnete Heizelement 11 in Form eines bandförmigen Metallleiters 11a ist innerhalb des Fügeabschnittes 4b des Deckelements 2 aufgenommen. Der Fügeabschnitt 4b ist hierbei durch ein Kunststoff-Spritzgussverfahren hergestellt, wobei der bandförmige Heizleiter 11a bei der Herstellung des Fügeabschnittes 4b in das entsprechende Spritzgusswerkzeug eingelegt und von dem Kunststoff des Fügeabschnittes 4b umspritzt wird. Durch eine Bestromung der beiden Heizelemente 11 wird das thermoplastische Kunststoffmaterial von Halbschale 1 und Deckelement 2 im Bereich der Fügeabschnitte 3a, 3b und 4a, 4b bis über die Schmelztemperatur erwärmt und eine Schweißverbindung von Halbschale 1 und Deckelement 2 realisiert. Die als Heizelement 11 eingesetzten Metallleiter 11 a können nachfolgend zur Signalleitung (z.B. Steuerung eines Energiespeichers) oder zur Stromleitung zu elektrischen Verbrauchern (z.B. der Beleuchtung eines Zweirades oder einem Elektromotor eines elektrisch betreibbaren Zweirades) genutzt werden.

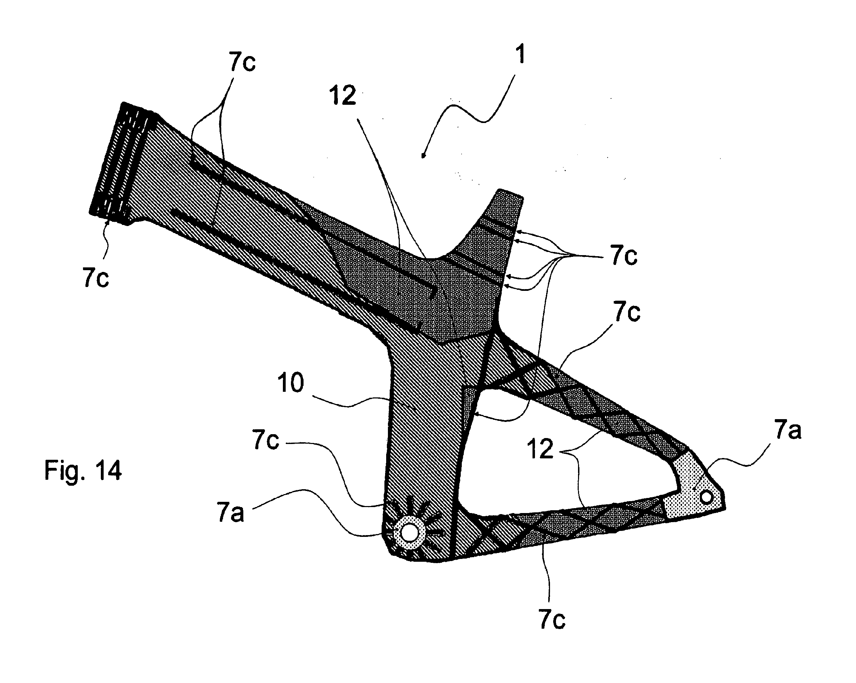

Die Fig. 14 zeigt eine Innenansicht einer Halbschale 1 eines erfindungsgemäßen Zweiradrahmens. Die Halbschale 1 weist in einem Kunststoff-Spritzgussverfahren angeformte funktionsintegrierende Elemente in Form von metallischen Inserts 7a und von Versteifungsrippen 7c auf. Die Versteifungsrippen 11 c weisen vorzugsweise ein Höhe-Breite Verhältnis von kleiner 10 auf. Die Halbschale 1 weist Zonen mit unterschiedlich stark ausgeprägter Faserverstärkung auf, so dass die Belastbarkeit der Zonen an die dort zu erwartende Beanspruchung angepasst ist. Die Halbschale 1 ist ebenfalls in einem Kunststoff-Spritzgussverfahren hergestellt, wobei lediglich ein Teilbereich der Halbschale 1 durch ein oder mehrere an-, hinter- und/oder umspritzte Faserverstärkte thermoplastische Organobleche 10 gebildet ist. Die Teilbereiche bilden die vorgenannten Zonen mit unterschiedlich stark ausgeprägter Faserverstärkung im Vergleich zu den spritzgegossenen Bereichen 12 (die vorzugsweise eine Kurz- oder Langfaserverstärkung aufweisen). In diesem Zusammenhang spricht man auch von einem Hybridaufbau der Halbschale 1 aus spritzgegossenen Bereichen 12 und Bereichen die durch mindestens ein, mittels eines Umformvorgang hergestellten, Faserverstärktes thermoplastisches Organoblech 10 gebildet sind. Das oder die Organoblech/e 10 sind in Bereichen für hohe mechanische Belastungen angeordnet wie etwa im Bereich des Tretlagers, des Steuerrohrs oder des Ober- bzw. Unterrohrs eines Zweiradrahmens. Der Umformvorgang des oder der Organobleche/s 10 kann hierbei vor oder während des Kunststoff-Spritzgussverfahrens (also innerhalb des hierfür erforderlichen Spritzguss-Werkzeuges) erfolgen. Die Verbindung der spritzgegossenen Bereiche 12 mit dem oder den Organoblech/en 10 erfolgt während des Spitzgussverfahrens, vorzugsweise durch partielles Anschmelzen und Verschweißen des thermoplastischen Organoblechs mit bzw. durch den eingespritzten, die spritzgegossenen Bereiche 12 bildenden, Kunststoff. Das Organoblech 10 kann einen mehrschichtigen Aufbau aus mindestens zwei Schichten aufweisen. Vorzugsweise wechselt hierbei eine Schicht mit einer Glasfaserverstärkung mit einer Schicht mit einer Carbonfaserverstärkung ab. Weiter vorzugsweise bildet die Schicht mit einer Carbonfaserverstärkung die Außenoberfläche (Sichtfläche) des Zweiradrahmens aus. Ein zusammen mit der Halbschale 1 einen erfindungsgemäßen Zweiradrahmen bildendes Deckelement 2 (hier nicht näher dargestellt) ist zumindest im Wesentlichen spiegelbildlich zu der Halbschale 1 ausgebildet.

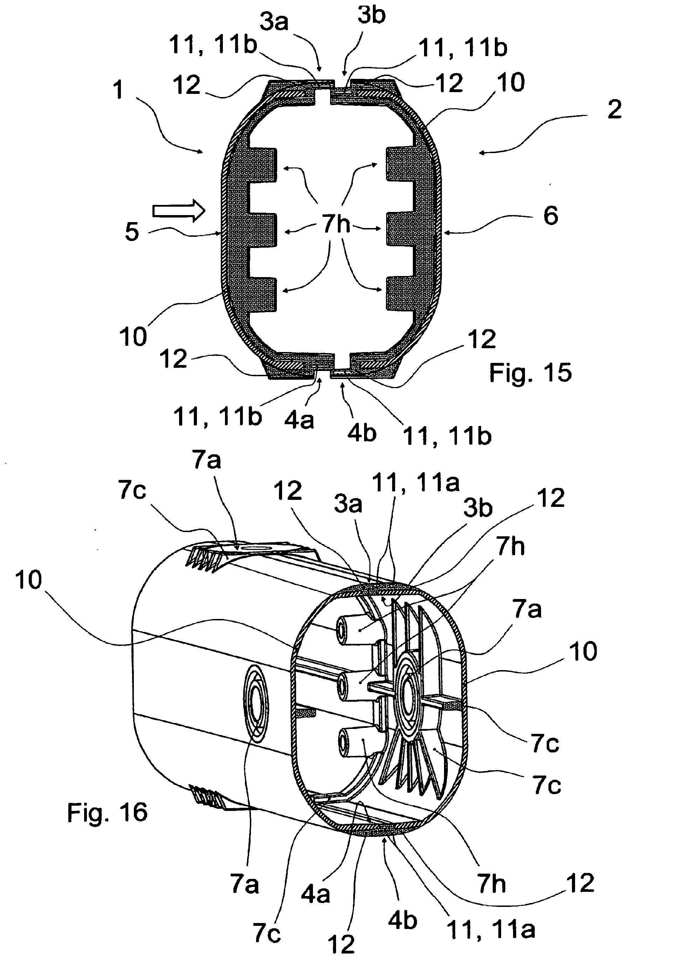

Die Fig. 15 zeigt eine Querschnittsdarstellung eines erfindungsgemäßen Zweiradrahmens. Der Zweiradrahmen wird durch eine Halbschale 1 aus einem zumindest bereichsweise Faserverstärkten thermoplastischen Kunststoffmaterial und einem mit der Halbschale 1 zumindest bereichsweise verbundenen, diese vorzugsweise schließenden, Deckelement 2 gebildet. Das Deckelement 2 ist zumindest im Wesentlichen spiegelbildlich zu der Halbschale 1 ausgebildet. Die Halbschale 1 und das Deckelement 2 können durch sich überlappende und/oder aneinander anliegende Fügeabschnitte 3a, 3b, 4a, 4b miteinander verbunden sein, wobei in dem hier dargestellten Querschnitt Halbschale 1 und Deckelement 2 noch nicht vollständig ineinander geschoben (angedeutet durch Doppelpfeil) sind. Die Halbschale 1 und das Deckelement 2 können mittels einer Klebstoffschicht und/oder einer Schweißverbindung und/oder einer Schraubverbindung und/oder einer Nietverbindung und/oder einer Clinchverbindung verbunden werden. Die Halbschale 1 und das Deckelement 2 weisen einen U-förmigen Querschnitt 5, 6 mit den daran angrenzenden Fügeabschnitte 3a, 3b, 4a, 4b auf. Im Bereich der Fügeabschnitte 3a, 3b, 4a, 4b ist jeweils mindestens ein bestrombares Heizelement 11 angeordnet, wobei das Heizelement 11 vorzugsweise durch mindestens eine Carbonfaser 11 b gebildet ist. Alternativ kann das bestrombare Heizelement 11 auch durch mindestens einen Metallleiter 11a oder auch eine Kombination von mindestens einem Metalleiter 11a und mindestens einer Carbonfaser 11 b gebildet sein. Die Heizelemente 11, 11a sind innerhalb der Fügeabschnitte 3a, 3b, 4a, 4b aufgenommen. Die Halbschale 1 und das Deckelement 2 weisen mindestens ein angeformtes, insbesondere in einem Kunststoff-Spitzgussverfahren angeformtes, funktionsintegrierendes Element 7 auf. Die Halbschale 1 und das Deckelement 2 weisen in einem Kunststoff-Spritzgussverfahren angeformte funktionsintegrierende Elemente 7 in Form von metallischen Inserts 7a (hier ein Lager), von Versteifungsrippen 7c und von Schraubdomen 7h zur Aufnahme von Schraubelementen (hier nicht näher dargestellt) auf. Ergänzend kann das Funktionsintegrierende Element als Stauraumelement zur Aufnahme z.B. eines elektrischen Energiespeichers, als Halteelement, als Schutzelement, als Spritzschutzelement, als Beleuchtungsaufnahmeelement, als Verbindungselement, als Medienkanal oder als Stoßschutzelement ausgebildet sein. Die Halbschale 1 und das Deckelement 2 schließen im verbundenen Zustand einen Hohlraum ein, wobei innerhalb des Hohlraumes mindestens ein elektrischer Leiter und/oder mindestens eine Steuerleitung und/oder mindestens eine Medienleitung und/oder mindestens ein Bewegungsübertragungsorgan und/oder wenigstens ein Energiespeicher angeordnet sein kann. Mindestens ein Fügeabschnitt 3a, 3b, 4a, 4b kann durch ein angeformtes, insbesondere in einem Kunststoff-Spitzgussverfahren angeformtes, Kaschierelement (hier nicht näher dargestellt) zumindest bereichsweise verdeckt sein. Die Halbschale 1 und das Deckelement 2 weisen jeweils Zonen mit unterschiedlich stark ausgeprägter Faserverstärkung auf, so dass die Belastbarkeit der Zonen an die dort zu erwartende Beanspruchung angepasst ist. Die Halbschale 1 und das Deckelement 2 sind in einem Kunststoff-Spritzgussverfahren hergestellt, wobei lediglich ein oder mehrere Teilbereich/e der Halbschale 1 und/oder des Deckelements 2 durch mindestens ein an-, hinter- und/oder umspritztes Faserverstärktes thermoplastisches Organoblech 10 gebildet ist / sind. Insbesondere die Fügeabschnitte 3a, 3b, 4a, 4b sind in einem Kunststoff-Spritzgussverfahren hergestellt um eine hohe Passgenauigkeit der Fügeabschnitte 3a, 3b, 4a, 4b zueinander zu gewährleisten. Die Teilbereiche bilden die vorgenannten Zonen mit unterschiedlich stark ausgeprägter Faserverstärkung im Vergleich zu den spritzgegossenen Bereichen 12 (die vorzugsweise eine Kurz- oder Langfaserverstärkung aufweisen). In diesem Zusammenhang spricht man auch von einem Hybridaufbau der Halbschale 1 und des Deckelements 2 aus spritzgegossenen Bereichen 12 und Bereichen die durch mindestens ein, mittels eines Umformvorgang hergestellten, Faserverstärktes thermoplastisches Organoblech 10 gebildet sind. Das oder die Organoblech/e 10 sind in Bereichen für hohe mechanische Belastungen angeordnet wie etwa im Bereich des Tretlagers, des Steuerrohrs oder des Ober- bzw. Unterrohrs eines Zweiradrahmens. Der Umformvorgang des oder der Organobleche/s 10 kann hierbei vor oder während des Kunststoff-Spritzgussverfahrens (also innerhalb des hierfür erforderlichen Spritzguss-Werkzeuges) erfolgen. Die Verbindung der spritzgegossenen Bereiche 12 mit dem oder den Organoblech/en 10 erfolgt während des Spitzgussverfahrens, vorzugsweise durch partielles Anschmelzen und Verschweißen des thermoplastischen Organoblechs mit bzw. durch den eingespritzten, die spritzgegossenen Bereiche 12 bildenden, Kunststoff. Die Faserverstärkung des thermoplastischen Kunststoffmaterials des oder der Organobleche/s 10 umfasst bereichsweise oder vollständig Endlosfasern. Die Faserverstärkung des thermoplastischen Kunststoffmaterials des Organobleches 10, der spritzgegossenen Bereiche 12, und/oder der funktionsintegrierenden Elemente 7 kann durch Glasfasern, Carbonfasern, Aramidfasern, Basaltfasern, Mineralfasern, Fasern aus nachwachsenden Rohstoffen, Metallfasern und/oder durch Polymerfasern gebildet sein. Das thermoplastische Kunststoffmaterial des Organobleches 10, der spritzgegossenen Bereiche 12, und/oder der funktionsintegrierenden Elemente 7 kann Polyamid (PA), insbesondere Polyamid 6 oder Polyamid 6.6, Polypropylen (PP), Polyethylen (PE), POM (Polyoxymethylen), Polyphenylensulfid (PPS), Polyetheretherketon (PEEK), Polyetherimid (PEI), Polyethylenterephthalat (PET), Polyphthalamid (PPA) oder Kombinationen der vorgenannten Kunststoffe umfassen. Das Organoblech 10 kann einen mehrschichtigen Aufbau aus mindestens zwei Schichten aufweisen. Vorzugsweise wechselt hierbei eine Schicht mit einer Glasfaserverstärkung mit einer Schicht mit einer Carbonfaserverstärkung ab. Weiter vorzugsweise bildet die Schicht mit einer Carbonfaserverstärkung die Außenoberfläche (Sichtfläche) des Zweiradrahmens aus.

Die Fig. 16 zeigt eine dreidimensionale Teildarstellung des erfindungsgemäßen Zweiradrahmens aus Fig. 14, wobei hier die innerhalb der Fügeabschnitte 3a, 3b, 4a, 4b aufgenommen Heizelemente 11 durch Metallleiter 11a gebildet sind. Durch eine Bestromung der beiden Heizelemente 11 wird das thermoplastische Kunststoffmaterial von Halbschale 1 und Deckelement 2 im Bereich der Fügeabschnitte 3a, 3b und 4a, 4b bis über die Schmelztemperatur erwärmt und eine Schweißverbindung von Halbschale 1 und Deckelement 2 realisiert. Die als Heizelement 11 eingesetzten Metallleiter 11 a können nachfolgend zur Signalleitung (z.B. Steuerung eines Energiespeichers) oder zur Stromleitung zu elektrischen Verbrauchern (z.B. der Beleuchtung eines Zweirades oder einem Elektromotor eines elektrisch betreibbaren Zweirades) genutzt werden.

Ein Verfahren zur Herstellung eines Zweiradrahmens gemäß Fig. 15 und 16 umfasst die folgenden Schritte: Bereitstellen mindestens einer erfindungsgemäßen Halbschale 1 aus einem zumindest bereichsweise Faserverstärkten thermoplastischen Kunststoffmaterial, Bereitstellen eines Deckelement 2, bereichsweises Verbinden der Halbschale 1 und des Deckelements 2 zu einem geschlossenen Hohlkörper. Das Bereitstellen der Halbschale 1 und des Deckelements 2 erfolgt über mindestens einen Umformschritt eines Faserverstärkten thermoplastischen Organoblechs 10 wobei die Halbschale 1 und das Deckelement 2 jeweils in einem Kunststoff-Spritzgussverfahren hergestellt sind und wobei lediglich ein oder mehrere Teilbereich/e der Halbschale 1 und des Deckelements 2 durch das mindestens eine an-, hinter- und/oder umspritzte Faserverstärkte thermoplastische Organoblech 10 gebildet ist / sind. Der Umformschritt kann in einem separaten Umformwerkzeug oder direkt innerhalb des für das Kunststoff-Spritzgussverfahren erforderlichen Spritzguss-Werkzeuges erfolgen.

## Patentansprüche

1. Zweiradrahmen gebildet durch mindestens eine Halbschale (1) aus einem zumindest bereichsweise Faserverstärkten thermoplastischen Kunststoffmaterial und einem mit der Halbschale (1) zumindest bereichsweise verbundenen, diese vorzugsweise schließenden, Deckelement (2), **dadurch gekennzeichnet, dass** die Halbschale (1) und/oder das Deckelement (2) in einem Kunststoff-Spritzgussverfahren hergestellt ist / sind, wobei lediglich ein oder mehrere Teilbereich/e der Halbschale (1) und/oder des Deckelements (2) durch mindestens ein an-, hinter- und/oder umspritztes Faserverstärktes thermoplastisches Organoblech (10) gebildet ist / sind.

2. Zweiradrahmen nach Anspruch 1, **dadurch gekennzeichnet, dass** das Deckelement (2) zumindest im Wesentlichen spiegelbildlich zu der Halbschale (1) ausgebildet ist.

3. Zweiradrahmen nach einem der vorstehenden Ansprüche, **dadurch gekennzeichnet, dass** die Halbschale (1) und das Deckelement (2) durch sich überlappende und/oder aneinander anliegende Fügeabschnitte (3a, 3b, 4a, 4b) miteinander verbunden sind.

4. Zweiradrahmen nach einem der vorstehenden Ansprüche, **dadurch gekennzeichnet, dass** die Halbschale (1) und/oder das Deckelement (2) mindestens einen U-förmigen Querschnitt (5, 6) mit daran angrenzenden Fügeabschnitten (3a, 3b, 4a, 4b) aufweist / aufweisen.

5. Zweiradrahmen nach Anspruch 3 oder 4, **dadurch gekennzeichnet, dass** im Bereich der Fügeabschnitte (3a, 3b, 4a, 4b) mindestens ein bestrombares Heizelement (11) angeordnet ist, wobei das Heizelement (11) vorzugsweise durch mindestens einen Metallleiter (11a) oder durch mindestens eine Carbonfaser (11 b) gebildet ist.

6. Zweiradrahmen nach Anspruch 5, **dadurch gekennzeichnet, dass** das Heizelement (11, 11 a, 11 b) innerhalb mindestens eines der Fügeabschnitte (3a, 3b, 4a, 4b) aufgenommen ist.

7. Zweiradrahmen nach einem der vorstehenden Ansprüche, **dadurch gekennzeichnet, dass** die Halbschale (1) und/oder das Deckelement (2) mindestens ein angeformtes, insbesondere in einem Kunststoff-Spitzgussverfahren angeformtes, funktionsintegrierendes Element (7) aufweist / aufweisen.

8. Zweiradrahmen nach einem der vorstehenden Ansprüche, **dadurch gekennzeichnet, dass** die Halbschale (1) und das Deckelement (2) einen Hohlraum einschließen, wobei innerhalb des Hohlraumes mindestens ein elektrischer Leiter und/oder mindestens eine Steuerleitung und/oder mindestens eine Medienleitung und/oder mindestens ein Bewegungsübertragungsorgan und/oder ein Energiespeicher angeordnet ist.

9. Zweiradrahmen nach einem der vorstehenden Ansprüche 3 bis 8, **dadurch gekennzeichnet, dass** mindestens ein Fügeabschnitt (3a, 3b, 4a, 4b) durch ein angeformtes, insbesondere in einem Kunststoff-Spitzgussverfahren angeformtes, Kaschierelement (9) zumindest bereichsweise verdeckt ist.

10. Zweiradrahmen nach einem der vorstehenden Ansprüche, **dadurch gekennzeichnet, dass** die Halbschale (1) und/oder das Deckelement (2) jeweils Zonen mit unterschiedlich stark ausgeprägter Faserverstärkung aufweisen, so dass die Belastbarkeit der Zonen an die dort zu erwartende Beanspruchung angepasst ist.

11. Zweiradrahmen nach einem der vorstehenden Ansprüche, **dadurch gekennzeichnet, dass** die Faserverstärkung des thermoplastischen Kunststoffmaterials und/oder des Faserverstärkten thermoplastischen Organoblechs (10) bereichsweise oder vollständig Endlosfasern umfasst.

12. Zweiradrahmen nach einem der vorstehenden Ansprüche, **dadurch gekennzeichnet, dass** die Faserverstärkung des thermoplastischen Kunststoffmaterials und/oder die Faserverstärkung des thermoplastischen Organoblechs (10) durch Glasfasern, Carbonfasern, Aramidfasern, Basaltfasern, Mineralfasern, Fasern aus nachwachsenden Rohstoffen, Metallfasern und/oder durch Polymerfasern gebildet ist.

## Claims

1. Bicycle frame formed by at least one half-shell (1) consisting of a thermoplastic material, which is fibre-reinforced at least in regions, and by a cover element (2), which is, at least in regions, connected to the half-shell (1) and preferably closes said half-shell (1), **characterized in that** the half-shell (1) and/or the cover element (2) are/is manufactured in a plastics injection-moulding process, merely one or more part-region/s of the half-shell (1) and/or of the cover element (2) being formed by at least one fibre-reinforced thermoplastic organic sheet (10) which is moulded, backmoulded and/or overmoulded thereon.

2. Bicycle frame according to Claim 1, **characterized in that** the cover element (2) is configured at least substantially in a mirror-imaged manner to the half-shell (1).

3. Bicycle frame according to one of the preceding claims, **characterized in that** the half-shell (1) and the cover element (2) are connected to one another by overlapping and/or mutually closely fitting joining portions (3a, 3b, 4a, 4b).

4. Bicycle frame according to one of the preceding claims, **characterized in that** the half-shell (1) and/or the cover element (2) have/has at least one U-shaped cross section (5, 6) having, adjacent thereto, joining portions (3a, 3b, 4a, 4b).

5. Bicycle frame according to Claim 3 or 4, **characterized in that** at least one heating element (11), which can be supplied with electrical power, is arranged in the region of the joining portions (3a, 3b, 4a, 4b), the heating element (11) being formed preferably by at least one metal conductor (11 a) or by at least one carbon fibre (11 b).

6. Bicycle frame according to Claim 5, **characterized in that** the heating element (11, 11 a, 11 b) is accommodated within at least one of the joining portions (3a, 3b, 4a, 4b).

7. Bicycle frame according to one of the preceding claims, **characterized in that** the half-shell (1) and/or the cover element (2) have/has at least one function-integrating element (7) which is formed thereon, in particular in a plastics injection-moulding process.

8. Bicycle frame according to one of the preceding claims, **characterized in that** the half-shell (1) and the cover element (2) enclose a cavity, at least one electric conductor and/or at least one control line and/or at least one media line and/or at least one motion transmission organ and/or one energy store being arranged within the cavity.

9. Bicycle frame according to one of the preceding Claims 3 to 8, **characterized in that** at least one joining portion (3a, 3b, 4a, 4b) is, at least in regions, covered by a concealing element (9) which is formed thereon, in particular in a plastics injection-moulding process.

10. Bicycle frame according to one of the preceding claims, **characterized in that** the half-shell (1) and/or the cover element (2) have in each case zones with a fibre reinforcement which is developed to a varying degree, such that the resilience of the zones is adapted to the stress which is to be expected there.

11. Bicycle frame according to one of the preceding claims, **characterized in that** the fibre reinforcement of the thermoplastic material and/or of the fibre-reinforced thermoplastic organic sheet (10), in regions or entirely, comprises continuous fibres.

12. Bicycle frame according to one of the preceding claims, **characterized in that** the fibre reinforcement of the thermoplastic material and/or the fibre reinforcement of the thermoplastic organic sheet (10) is formed by glass fibres, carbon fibres, aramid fibres, basalt fibres, mineral fibres, fibres from renewable raw materials, metal fibres and/or by polymer fibres.

## Revendications

1. Cadre de deux-roues, formé par au moins une demi-coquille (1) en un matériau plastique thermoplastique au moins localement renforcé par des fibres et un élément de couvercle (2) assemblé au moins localement à la demi-coquille (1) et de préférence fermant cette dernière, **caractérisé en ce que** la demi-coquille (1) et/ou l'élément de couvercle (2) est/sont fabriqué(s) par un procédé de moulage par injection de matière plastique, dans lequel uniquement une seule ou plusieurs région(s) partielle(s) de la demi-coquille (1) et/ou de l'élément de couvercle (2) est/sont formée(s) par au moins une tôle organique thermoplastique (10) renforcée par des fibres et injectée à l'avant, à l'arrière et/ou par enrobage.

2. Cadre de deux-roues selon la revendication 1, **caractérisé en ce que** l'élément de couvercle (2) est configuré au moins pour l'essentiel de façon symétrique à la demi-coquille (1).

3. Cadre de deux-roues selon l'une quelconque des revendications précédentes, **caractérisé en ce que** la demi-coquille (1) et l'élément de couvercle (2) sont reliés l'un à l'autre par des parties de jonction (3a, 3b, 4a, 4b) qui se chevauchent et/ou qui s'appliquent l'une contre l'autre.

4. Cadre de deux-roues selon l'une quelconque des revendications précédentes, **caractérisé en ce que** la demi-coquille (1) et/ou l'élément de couvercle (2) présentent au moins une section transversale en U (5, 6) avec des parties de jonction (3a, 3b, 4a, 4b) qui y sont adjacentes.

5. Cadre de deux-roues selon la revendication 3 ou 4, **caractérisé en ce qu'**au moins un élément chauffant électriquement conducteur (11) est disposé dans la région des parties de jonction (3a, 3b, 4a, 4b), dans lequel l'élément chauffant (11) est formé de préférence par au moins un conducteur métallique (11a) ou par au moins une fibre de carbone (11 b).

6. Cadre de deux-roues selon la revendication 5, **caractérisé en ce que** l'élément chauffant (11, 11 a, 11 b) est logé à l'intérieur d'au moins une des parties de jonction (3a, 3b, 4a, 4b).

7. Cadre de deux-roues selon l'une quelconque des revendications précédentes, **caractérisé en ce que** la demi-coquille (1) et/ou l'élément de couvercle (2) présente/présentent au moins un élément à fonction intégrée façonné (7), en particulier façonné dans un procédé de moulage par injection de plastique.

8. Cadre de deux-roues selon l'une quelconque des revendications précédentes, **caractérisé en ce que** la demi-coquille (1) et l'élément de couvercle (2) entourent une cavité, dans lequel au moins un conducteur électrique et/ou au moins une ligne de commande et/ou au moins une canalisation de fluide et/ou au moins un organe de transmission de mouvement et/ou un accumulateur d'énergie est disposé à l'intérieur de la cavité.

9. Cadre de deux-roues selon l'une quelconque des revendications précédentes 3 à 8, **caractérisé en ce qu'**au moins une partie de jonction (3a, 3b, 4a, 4b) est masquée au moins en partie par un élément contrecollé façonné (9), en particulier façonné dans un procédé de moulage par injection de plastique.

10. Cadre de deux-roues selon l'une quelconque des revendications précédentes, **caractérisé en ce que** la demi-coquille (1) et/ou l'élément de couvercle (2) présentent respectivement des zones dotées d'un renforcement de fibres d'intensité différemment élevée, de telle manière que la capacité de charge des zones soit adaptée à la sollicitation attendue dans ces zones.

11. Cadre de deux-roues selon l'une quelconque des revendications précédentes, **caractérisé en ce que** le renforcement de fibres du matériau plastique thermoplastique et/ou de la tôle organique thermoplastique (10) renforcée par des fibres comprend localement ou partout des fibres sans fin.

12. Cadre de deux-roues selon l'une quelconque des revendications précédentes, **caractérisé en ce que** le renforcement de fibres du matériau plastique thermoplastique et/ou le renforcement de fibres de la tôle organique thermoplastique (10) est formé par des fibres de verre, des fibres de carbone, des fibres d'aramide, des fibres de basalte, des fibres minérales, des fibres en matières premières à croissance postérieure, des fibres métalliques et/ou des fibres polymères.
